# EUROPÄISCHE PATENTSCHRIFT

(11) **EP 1 384 152 B1**
(45) Veröffentlichungstag und Bekanntmachung des Hinweises auf die Patenterteilung: **21.09.2005**
(21) Anmeldenummer: 02737776.1
(22) Anmeldetag: 08.04.2002
(51) Int. Cl.: G06F 11/28

(54) **VERFAHREN ZUR ERFASSUNG UND AUFZEICHNUNG VON SYSTEMINFORMATIONEN UND ABLÄUFEN IN VERTEILTEN NEBENLÄUFIGEN KOMPONENTENBASIERTEN SOFTWARESYSTEMEN**
METHOD FOR DETERMINING AND RECORDING SYSTEM INFORMATION AND FUNCTION IN DISTRIBUTED PARALLEL COMPONENT BASED SOFTWARE SYSTEMS
PROCEDE DE DETECTION ET D'ENREGISTREMENT D'INFORMATIONS SYSTEME ET DU DEROULEMENT DANS DES SYSTEMES LOGICIELS A COMPOSANTS, DISTRIBUES ET FONCTIONNANT EN PARALLELE

(30) Priorität: 12.04.2001 DE 10118502
(43) Veröffentlichungstag der Anmeldung: 28.01.2004
(73) Patentinhaber: SIEMENS AKTIENGESELLSCHAFT, 80333 München (DE)
(72) Erfinder: UNGERHOFER, Stefan, A-6322 Kirchbichl (AT); SAUER, Horst, 80689 München (DE)
(86) Internationale Anmeldenummer: PCT/DE2002/001278
(87) Internationale Veröffentlichungsnummer: WO 2002/084491

(56) Entgegenhaltungen:
- DE-A- 4 323 787
- HINES K AND BORRIELLO G: "Debugging distributed implementations of modal process systems" PROCEEDINGS OF ACM SIGPLAN. WORKSHOP ON LANGUAGES, COMPILERS AND TOOLS FOR EMBEDDED SYSTEMS, XX, XX, Juni 1998 (1998-06), Seiten 1-7, XP002188025
- CONSENS M P ET AL: "Visualizing and Querying Distributed Event Traces with Hy+" APPLICATIONS OF DATABASES. INTERNATIONAL CONFERENCE, XX, XX, Juni 1994 (1994-06), Seiten 123-141, XP002200870
- KIMELMAN D ET AL: "ON-THE-FLY TOPOLOGICAL SORT-A BASIS FOR INTERACTIVE DEBUGGING AND LIVE VISUALIZATION OF PARALLEL PROGRAMS" ACM SIGPLAN NOTICES, ASSOCIATION FOR COMPUTING MACHINERY, NEW YORK, US, Bd. 28, Nr. 12, 1. Dezember 1993 (1993-12-01), Seiten 12-20, XP000431364 ISSN: 0362-1340
- AUGUSTON M: "Building Program Behavior Models" PROCEEDINGS EUROPEAN CONFERENCE ON ARTIFICIAL INTELLIGENCE, CHICHESTER,, GB, August 1998 (1998-08), Seiten 19-26, XP002200871

## Beschreibung

Verfahren zur Erfassung und Aufzeichnung von Systeminformationen und Abläufen in verteilten nebenläufigen komponentenbasierten Softwaresystemen

Die Erfindung betrifft ein Verfahren zum Tracing, also zum Verfolgen von Abläufen über Ereignismeldungen eines zu beobachtenden Systems, wobei das zu beobachtende System mehrere Prozesse, Tasks oder Threads aufweisen und auf verschiedenen Geräten ablaufen kann.

Solche verteilten nebenläufigen komponentenbasierten Softwaresysteme, wie zum Beispiel Microsoft COM-, CORBA- oder Enterprise Java Beans-Systeme, sind bspw. in dem Buch von Jason Pritchard mit dem Titel "COM und CORBA Side by Side Architectures, Strategies and Implementations, Addison-Wesley, 1999, Seiten 17 bis 25 kurz vorgestellt.

In allen Phasen der Entwicklung, also während der Implementierung, Integration und des Tests, sowie des Einsatzes von Softwaresystemen, das heißt bei der Inbetriebnahme und Überwachung des Betriebs, besteht der Bedarf Informationen zur Laufzeit des Systems zum Zwecke der Analyse, der Fehlerlokalisierung oder des Nachweises der Korrektheit der Software einsehen und auswerten zu können. Diese Informationen umfassen Systemzustände, wie zum Beispiel interne Variablen, und Informationen über Kommunikationsabläufe und Ereignisse einschließlich deren zeitlicher Abfolge.

Bislang sind folgende Tracing-Methoden bekannt:
a) Ein Debugger, unter dessen Kontrolle jeder Systemprozess abläuft und der das interaktive Setzen von Haltepunkten (Breakpoints) und das Einsehen von Debugging-Information, also von Inhalten lokaler und globaler Variablen, beim Erreichen des Haltepunkts ermöglicht. Dieser Lösungsansatz erlaubt jedoch gerade in verteilten, nebenläufigen Systemen nur einen lokalen Einblick, der nur schwer Aussagen über das Gesamtsystem oder über dynamische Abläufe möglich macht. Außerdem wird das Systemverhalten durch das interaktive Anhalten einzelner Komponenten/Prozesse empfindlich gestört oder gar zum Absturz gebracht.
b) Eine zusätzliche Debug-Information im Programmcode, also Namen von Objekten, Variablen usw. sowie Informationen, die eine Abbildung von Source-Code-Zeilen auf Maschinencode betreffen, zur weiteren Auswertung, wobei diese Debug-Information meist zur Fehleranalyse nach Systemabstürzen, also bei der post mortem Analyse genutzt wird. Auch dieser Ansatz bietet im Wesentlichen nur einen Lokalblick auf das System. Bei post mortem Analysen ist - allein durch die Kenntnis des Endzustand des Systems - oft kein Rückschluss auf die eigentliche Fehlerursache möglich. Des weiteren soll meist, insbesondere bei kleinen, eingebetteten Systemen mit geringen Ressourcen, die Software ohne Debug-Information ausgeliefert werden, um diese möglichst kompakt zu halten.
c) Ein vorab instrumentierter Code, also ein zusätzlicher Programmcode, der immer Teil des fertigen Systems ist und bei Bedarf aktiviert wird, um relevante Systeminformationen zu generieren. Auch dieser Ansatz ist oft aus Gründen der Ressourcenknappheit auf kleinen Systemen kaum anwendbar, oder aber die Instrumentierung wird nur auf einige Teile des Systems beschränkt. Die Instrumentierung ist statisch und später nicht änderbar, das heißt dass nur Systeminformationen von Codestellen, die schon bei der Implementierung dafür vorgesehen worden sind, angezeigt werden können.

Gerade verteilte Applikationen zeichnen sich insbesondere durch ihre Größe und Komplexität aus und sind infolgedessen mit den üblichen Mitteln nur schwer zu testen.

Solche Verfahren bzw. Systeme sind beispielsweise aus aus WO 2000/55733 A1, DE 43 23 787 A1, US 5 790 858, EP 0 470 322 A1, US 5 307 498 und US 5 371 746 bekannt.

Das Dokument 'Debugging distributed implementations of modal process systems' von K. Hines und G. Borriello (Procedings of ACM Sigplan. Workshop on Languages, Compilers and Tools for Embedded Systems, Juni 1998, Seiten 1-7), beschreibt, dass der Ablauf von verteilten, parallelen Programmen in verschiedenen Diagrammen graphisch dargestellt werden kann. Dabei werden logische Kommunikationszusammenhänge zwischen den einzelnen Systemkomponenten hergestellt und Systemereignisse in die richtige zeitliche Abfolge gebracht.

Die der Erfindung zugrunde liegende Aufgabe besteht nun darin ein Verfahren bzw. eine Vorrichtung anzugeben, bei der die oben genannten Nachteile vermieden werden.

Diese Aufgabe wird erfindungsgemäß hinsichtlich des Verfahrens durch die Merkmale des Patentanspruchs 1 und hinsichtlich der Vorrichtung durch die Merkmale des Patentanspruchs 4 gelöst.

Die weiteren Ansprüche betreffen bevorzugte Weiterbildungen des Verfahrens bzw. der Vorrichtung.

Durch die Erfindung wird eine universelle Möglichkeit zum Test bzw. zur Beobachtung von verteilten, nebenläufigen, komponentenbasierten Softwaresystemen geschaffen, die das zu beobachtende System minimal verändert, automatisch die richtigen Systemkomponenten mit Inspektionsinstrumenten versieht, eine semantische Zuordnung von Kommunikationsnachrichten zwischen jeweiligen Sender und Empfänger und eine logische Ereignisabfolge ohne synchronisierte Uhrzeit auf den einzelnen Komponenten des verteilten Systems in Form eines Auswertungsmodells zur Verfügung stellt auf das beliebig geartete Auswertungswerkzeuge aufsetzen können.

Die Erfindung wird nachfolgend anhand eines in den Zeichnungen dargestellten Ausführungsbeispiels näher erläutert. Dabei zeigt
- Figur 1: eine Übersichtsdarstellung zur Erläuterung des Verfahrens bzw. der erfindungsgemäßen Vorrichtung,
- Figur 2: eine Darstellung zur Erläuterung der automatischen Instrumentierung,
- Figur 3: eine Darstellung zur Erläuterung der Funktionsweise der sogenannten Call-Instrumentierung,
- Figur 4: eine Darstellung zur Erläuterung des abstrakten Designs eines in erfindungsgemäßen Verfahren verwendeten Modells,
- Figur 5: eine Darstellung zur Erläuterung der Applikationsstruktur dieses Modells und
- Figur 6: eine Darstellung zur Erläuterung der physikalischen Struktur dieses Modells.

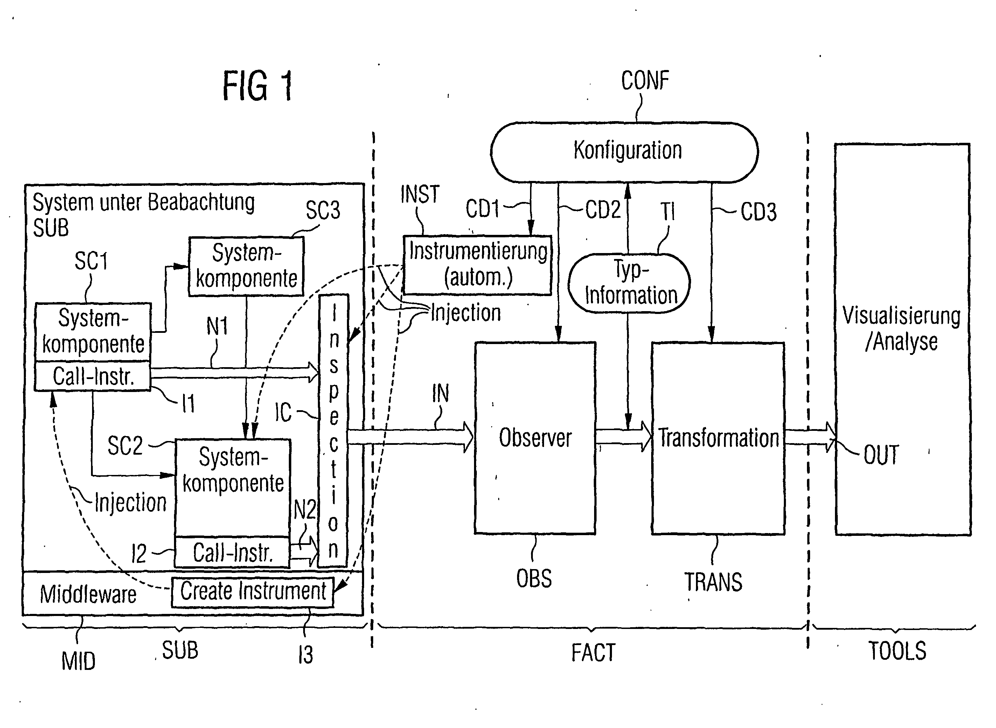

In Figur 1 ist ein Rahmenprogramm FACT für automatisiertes Komponententracing dargestellt, das seine Eingangsinformationen IN in Form von Nachrichten aus einem unter Beobachtung stehenden System SUB erhält und selbst Ausgangsinformationen, OUT, entweder online oder offline, einem Visualisierungs- oder Analysewerkzeug TOOLS zur Verfügung stellt. In Abhängigkeit von Informationen aus einem Konfigurationsmodul CONF mit Hilfe eines Instrumentierungsmoduls INST eine Einpflanzung oder Injektion von Inspektionsinstrumenten I1..I3 in eine von der Konfiguration abhängige Auswahl von Systemkomponenten SC1 und SC2 der Systemkomponenten SC1 ... SC3 oder in eine sogenannte und weiter unter näher beschriebene Middleware MID bewirkt. Optional kann auch ein Einpflanzen bzw. eine Injektion einer Inspektionskomponente IC in das System unter Beobachtung SUB erfolgen. Die Inspektionsinstrumente I1 und I2 der Systemkomponenten SC1 und SC2 liefern dann ihre Nachrichten entweder direkt oder unter Ausnutzung der Inspektionkomponente IC, die wiederum ihrerseits die Nachrichten IN für das Rahmenprogramm FACT liefert. Das Rahmenprogramm FACT weist einen Beobachtungteil OBS auf, der die Nachrichten IN sammelt und in Abhängigkeit von Typinformationen TI, die auch dem Konfigurationsmodul zur Verfügung stehen, gefiltert einem Transformationsmodul TRANS übergeben werden, wo sie dann in Abhängigkeit des Konfigurationsmoduls als Daten OUT für ein universelles Auswertungsmodell an Werkzeuge TOOLS für die Visualisierung oder Analyse übergeben werden. Diese Dreiteilung des Systems ist als logische Gliederung zu sehen und trifft keine Aussage über eine physische Strukturieren auf mehrere beteiligte Prozesse oder Geräte.

Der globale Ablauf des Rahmenprogramms FACT gliedert sich im Wesentlichen in zwei Vorgänge:
a) Die Instrumentierung: Die Komponente oder das Modul automatische Instrumentierung INST pflanzt unter Berücksichtigung der Konfigurationsdaten des Moduls CONF und der Typinformation TI den Systemkomponenten SC1 und SC2 des unter Beobachtung stehenden Systems SUB die Instrumente I1, I2 oder I3 ein. Dieser Vorgang findet statt, sobald eine Komponente erzeugt wird, also sowohl beim Start des Systems als auch bei einer späteren dynamischen Erweiterung zur Laufzeit des Systems SUB.
b) Die Aufzeichnung und Weiterleitung von Systeminformation: Es werden Nachrichten in der Inspektionskomponente IC erzeugt und an den Beobachter OBS weitergeleitet, der diese Nachrichten sammelt und in Abhängigkeit des Konfigurationsmoduls bzw. der Typinformation filtert bevor er sie an das Transformationsmodul weiterleitet. Unter Verwendung der Typinformation TI erfolgt im Modul TRANS eine Umsetzung und eine Weiterleitung zur Visualisierung bzw. Analyse.

Die automatische Instrumentierung von Applikationskomponenten zur Gewinnung von Systemdaten und der Dokumentation dynamischer Systemabläufe wird durch Kombination und Anwendung an sich gängiger Methoden der Systemüberwachung und -erweiterung realisiert, bietet aber gegenüber anderen Verfahren eine Reihe von Vorteilen:
1. Die Instrumentierung erfolgt zur Laufzeit des Systems, das heißt das Systemdesign und die Systemstruktur ist dadurch nicht beeinflusst.
2. Für eine Instrumentierung ist kein neuerliches Übersetzen des Programmcodes notwendig, das Verfahren kann auch bereits als Release-Version ausgelieferte Software oder auf binäre Komponenten von Fremdherstellern angewandt werden.
3. Es können alle relevanten Programmteile instrumentiert werden, wobei hier wesentlich ist, dass zur Laufzeit erzeugte Applikationskomponenten automatisch nachinstrumentiert werden. Dadurch ist eine Sicht auf das Gesamtsystem und nicht nur auf statische, also zum Hochlaufzeitpunkt bekannte, Teile möglich. Es können auch zur Laufzeit der Umfang der Instrumentierung konfiguriert und die zu erfassenden Informationen definiert werden.
4. Der Instrumentierungscode ist sehr kompakt und deshalb auch für Embedded-Systeme mit begrenzten Ressourcen anwendbar.
5. Die Ausführung des Instrumentierungscodes ist sehr performant.
6. Das Verhalten der Applikation wird nur geringfügig beeinflusst.

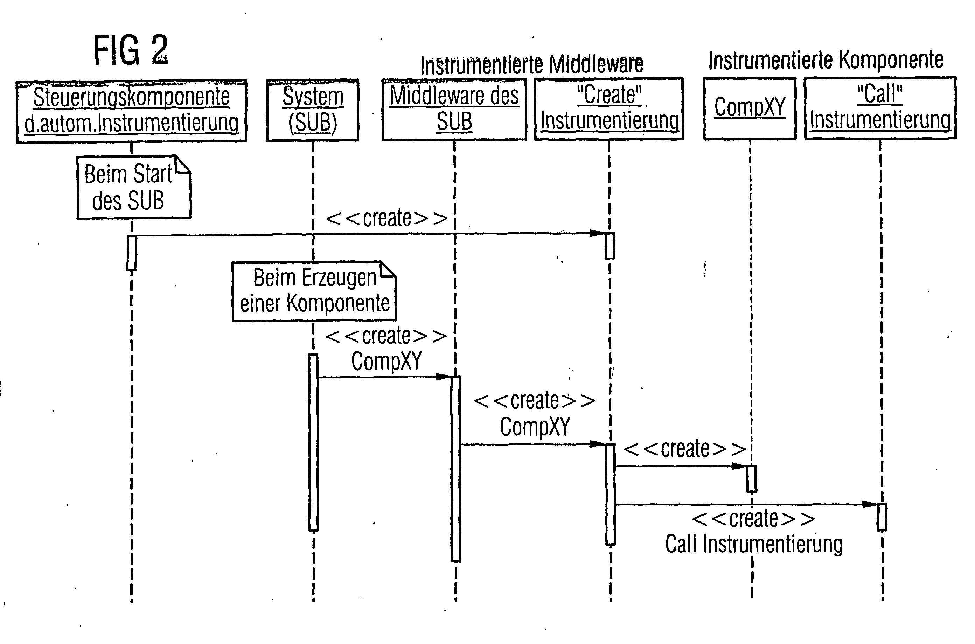

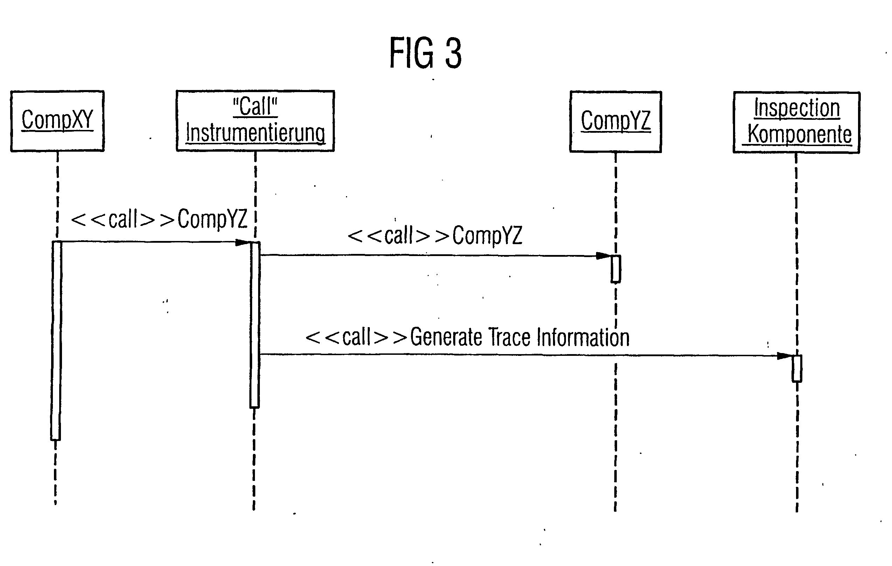

Das Modul INST zur automatischen Instrumentierung kommt zu zwei Zeitpunkten zum Einsatz. Erstens beim Start des zu untersuchenden Systems SUB, wobei durch die Instrumentierung einer sogenannten "Middleware" mit einer "Create"-Instrumentierung I3 dafür gesorgt wird, dass das Rahmenprogramm FACT beim Anlegen einer neuen Komponente im zu beobachtenden System SUB benachrichtig wird. Unter Middleware MID wird hierbei eine Software verstanden, die zwischen einer Applikation und der darunter liegenden Netzwerkschicht vermittelt. Die Middleware exportiert ihre Funktionalität über eine definierte Programmierschnittstelle (API) und realisiert beispielsweise die Interaktion zwischen Applikationsteilen, die auf Geräten verschiedenen Plattformen ablaufen. Der zweite Zeitpunkt betrifft das Anlegen einer Systemkomponente zu einem späteren Zeitpunkt, während der Laufzeit des Systems SUB. Hierbei pflanzt der "Create"-Instrumentierungsteil I3 eine "Call"-Instrumentierungskomponente I1 in die neu angelegte Komponente SC1 ein, die alle Aufrufe dieser Komponente überwacht. Diese Zusammenhänge werden in den Figuren 2 und 3 verdeutlicht.

Die Instrumentierungskomponenten I1,I2 und I3 werden direkt mit den entsprechenden Teilen des Systems SC1, SC2 und MID, also der Middleware oder Systemkomponenten, gekoppelt und bilden eine Einheit. Die Schnittstellen einer Komponente werden dabei nicht verändert, wodurch sich auf das gesamte System keinerlei Auswirkungen ergeben. Die Inspektionskomponente ist als generisches Objekt realisiert, das heißt sie empfängt von verschiedenen instrumentierten Codestellen Daten. Von Vorteil ist dabei, dass der Instrumentierungscode pro Gerät nur einmal existiert aber von verschiedenen Prozessen aus angesprochen werden kann, wodurch Speicherplatz gespart wird. Das Konfigurationsmodul CONF ermöglicht die Auswahl der Systemkomponenten, die bei der Informationsgewinnung zur Systembeobachtung Nachrichten aufzeichnen sollen . Dieses Konfigurationsmodul verwendet die Typinformation TI, mit der alle Systemkomponenten SC1 ... SC3 eindeutig identifiziert werden können und die unter anderem lesbare Namen für die Systemelemente enthält. Die Instrumentierungskomponente vergleicht den Typ der Systemkomponente mit dem zur Datengenerierung vorgesehenen Typen und entscheidet über eine Instrumentierung der Komponente. Dadurch ist gesichert, dass ausschließlich Daten generiert werden, die der Anwender dafür vorgesehen hat, zudem wird einem möglichen Überlaufen von Speicherpuffern vorgebeugt.

Das Beobachtungsmodul OBS ist innerhalb des Rahmenprogramms verantwortlich für das Sammeln der Rohdaten von den verschiedenen Inspektionsinstrumenten und für die Selektion bzw. Filterung der Daten, die an das Transformationsmodul weitergegeben werden. Welche Daten selektiert bzw. gefiltert werden, wird durch die Konfiguration vorgegeben. Die Konfiguration kann vorab oder zur Laufzeit des Systems erfolgen. Das Beobachtungsmodul OBS kann - unabhängig von der Konfiguration der Instrumentierung - ebenfalls bezüglich der zu tracenden Komponenten bzw. Objekte, der Traceinhalte und der Tracetiefe, also des Detaillierungsgrades der gesammelten Systeminformationen, konfiguriert werden.

Das Transformationsmodul TRANS übernimmt die Aufgabe, in den verschiedenen Teilen des zu beobachtenden Systems SUB gesammelten Rohdaten aufzubereiten und zu ergänzen. Die Daten OUT sind für ein Modell und werden über eine definierte Schnittstelle an Visualisierungs-/Analyse-Werkzeuge übergeben. Das Modell ist flexibel gewählt, um eine Vielzahl möglicher Tools bedienen zu können. Im Transformationsmodul werden die logischen und Kommunikations-Zusammenhänge zwischen einzelnen Systemelementen hergestellt, die Ereignisse in die zeitlich richtige Abfolge gebracht und statische Typinformationen der Systemkomponenten hinzugefügt, um die Daten zu strukturieren und, beispielsweise durch Namen, für den Menschen lesbar zu machen.

Folgende Eingangsinformationen IN werden aus dem System unter Beobachtung SUB benötigt:
1. Eine Identifizierung der Komponente innerhalb der Programmeinheit sowie der Laufzeitumgebung, das heißt des aktuellen Prozesses und des aktuellen Threads. Diese Information kann in der Regel über Betriebssystemfunktionen abgefragt werden, wobei man pro Gerät eine eindeutige Identifikation ID erhält. Eine solche ID bedeutet eine eindeutige Kennung für ein Objekt und besteht zumeist aus einem ganzzahligen nicht negativen Wert.
2. Eine Typinformation zu den Systemelementen, die beobachtet werden sollen, also zu den Komponenten, Objekten, Interfaces und globalen Funktionen. Die Typinformation beschreibt die abstrakte Struktur der Systemelemente. Sie wird zum Zeitpunkt des Designs der Applikation festgelegt und liegt meist in einem wohl definierten Format vor. Das Rahmenprogramm FACT selbst benötigt diese Informationen nicht unbedingt, aber die auf dieses Rahmenprogramm aufsetzenden Werkzeuge TOOLS können diese verwenden, um die Designstruktur zu dokumentieren und um eine von Menschen lesbare Darstellung zu implementieren.

Im Einzelnen sind folgende Teile der Typinformation relevant:

Namen der Systemelemente bzw. manchmal auch nur eindeutige Identifizierungsnummern IDs.

Für Objekte und Interfaces: eine Liste von Methoden und deren Signatur, das heißt Parameterinformationen und Rückgabewerte der Methode.

Für Komponenten: eine Liste der Interfaces, also der Schnittstellen dieser Komponente.

Für Interfaces: eine Liste der Methoden, die dieses Interface umfasst und deren Signatur.

Falls Systemelemente über Vererbung oder Aggregation Implementierungen anderer Elemente nutzen, was bei objektorientierten Programmiersprachen vorgesehen ist, auch die Struktur der Vererbungs-/Aggregationsbeziehungen.

Zusätzlich werden folgende Dienste des zu beobachtenden Systems in Anspruch genommen:

Auflisten der zu einer Applikation gehörenden Module bzw. Identifizierung beteiligter Komponenten.

Injektion von Codeteilen oder Bibliotheken in fremde Prozesse, um eine Instrumentierung zu bewirken.

Interception (Abfangen) von Systemfunktionen, insbesondere von Funktionen, die Objekte bzw. Komponenten erzeugen, um auch während der Laufzeit erzeugte Komponenten überwachen zu können, und

Interception von Registriermeldungen und Methodenabrufen.

Diese Dienste werden zum Teil vom Betriebssystem zur Verfügung gestellt bzw. im Modul FACT unter Benutzung bekannter Verfahren implementiert.

Bei der Transformation werden folgende Informationen für ein Modell aus den Rohdaten IN abgeleitet:
- Informationen zu Systemelementen, gegliedert nach verschiedenen Aspekten: das abstraktes Design, die Applikationsstruktur und die physikalische Laufzeit-Struktur betreffend
- Informationen zur Systemstruktur, also die Relationen der Systemelemente zueinander, wie z.B. die Zugehörigkeit von Prozessen zu Geräten, wobei diese Zuordnung nicht statisch sondern über die Laufzeit veränderbar ist,
- Daten, die den Lebenszyklus der Systemelemente beschreiben,
- Informationen über lokale und verteilte Kommunikationsabläufe und Ereignisse,
- Daten, die die Zusammenhänge zwischen kommunizierenden Systemelementen sowie die logische Ereignisabfolge beschreiben, ohne dass hierzu synchronisierte Uhren nötig wären, und
- Daten, die eine eindeutige und durch den Menschen lesbare Identifizierung der Systemelemente, d.h. Klartext-Namen und nicht nur interne IDs erlauben.

Hierzu generiert das Modul FACT systemweit eindeutige IDs für die einzelnen Systemelemente und für die einzelnen Kommunikationsabläufe, die den jeweiligen Systemmeldungen hinzugefügt werden.

Für manche Systemelemente werden vom Betriebssystem bereits IDs vergeben. Diese sind jedoch nur lokal, aso bspw. für eine Programmeinheit oder für ein Gerät, eindeutig. Die Transformationskomponente kombiniert verschiedene lokale IDs zu einer systemweit eindeutigen ID für jedes Systemelement oder vergibt selbst eindeutige IDs. Damit ist eine systemweite Identifizierung möglich.

Beim Anlegen neuer Systemelemente, entweder zum Startzeitpunkt oder zur Laufzeit, wird unter Verwendung der Typinformation und von Information bzgl. der Laufzeitumgebung zusätzlich noch der Zusammenhang zwischen den verschiedenen Systemelementen hergestellt. Aus diesen Daten kann dann auf die Laufzeit-Struktur des verteilten Systems geschlossen werden.

Die durch die Instrumentierung generierten Informationen, die einen einzelnen Kommunikationsablauf dokumentieren, stehen in einer logischen Abhängigkeit die jedoch in den gewonnenen Rohdaten nicht unmittelbar enthalten ist. Das Verfahren erweitert diese Informationen um die entsprechenden Abhängigkeiten.

Hierzu wird für jede einzelne Kommunikation eine eindeutige ID generiert. Jedes Ereignis, das Teil dieses Kommunikationsablaufs ist, enthält diese ID. Dadurch wird folgendes ermöglicht:
- eine semantische Zuordnung von Kommunikationsnachrichten des/der Sender(s) zu denen des Empfängers und
- die Bestimmung der logischen Ereignisabfolge ohne synchronisierte Uhrzeit auf den einzelnen Knoten des verteilten Systems

Die Ausgabeschnittstelle mit den Signalen OUT basiert auf einem Datenmodell für die durch die Inspection-Komponente erzeugten Systemnachrichten.

Das Modell selbst lässt sich in mehrere logische Teile gliedern, die verschiedene Aspekte des SUB beschreiben oder verschiedene Sichten auf das Systems definieren:
- das abstrakte Design,
- die Applikationsstruktur zur Laufzeit und
- die physikalische Struktur.

Das abstrakte Design einer verteilten Applikation wird in einer sehr frühen Entwicklungsphase festgelegt und ist statisch. Es wird nicht durch die Instrumentierung getraced, sondern aus der Typinformation abgeleitet. Diese Daten werden als Teil dieses Modells gesehen, da Tools, die hierauf aufsetzen, sie zur Identifizierung über vom Menschen lesbare Namen, Strukturierung sowie zur Filterung der Systemelemente verwenden können.

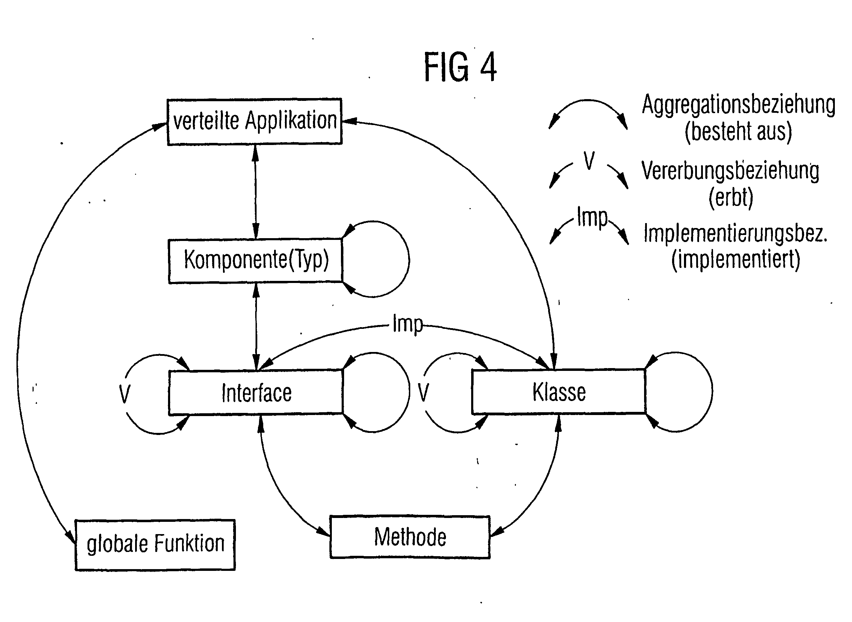

Das Modell weist eine in Figur 4 dargestellte Struktur auf, bei der die verteilte Applikation, die Komponente, das Interface, die Klasse, die Methode und die globale Funktion über Aggregations-, Vererbungs- und Implementierungsbeziehungen in Bezug gesetzt sind:
Komponenten und Klassen können bspw. aggregiert bzw. geschachtelt werden oder in Vererbungsbeziehung zueinander stehen.

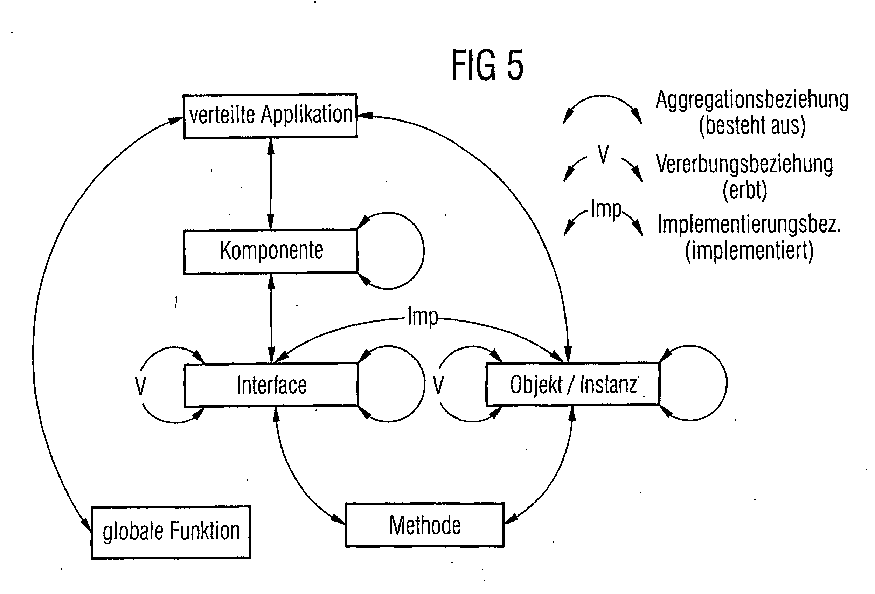

Die Applikationsstruktur ist in Figur 5 dargestellt und beschreibt - im Unterschied zum abstrakten Design - die konkreten Instanzen einer verteilten Applikation, die während eines speziellen Programmlaufs erzeugt bzw. gelöscht wurden.

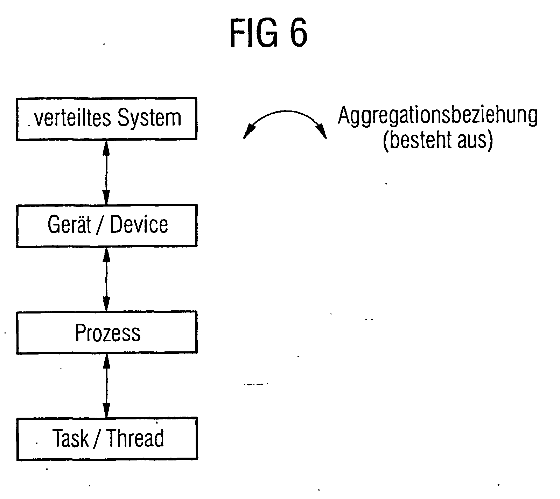

Die physikalische Struktur ist in Figur 6 dargestellt, beschreibt die Laufzeitumgebung des verteilten Systems und gliedert sich folgendermaßen:
Verteiltes System, Gerät/Device, Prozess und Task/Thread.

Das Modell definiert folgende Typen von Systemereignissen, die von der Inspectionskomponente generiert werden:
- Kommunikationsereignisse: send/receive
- Registrierungsereignisse: create/destroy
- Lokale Ereignisse: pass
- periodische Ereignisse: periodic update

Alle Ereignisse beinhalten einen Zeitstempel, also eine lokale Geräte-Zeit, ihren Typ und eine Referenz auf die beteiligten Systemelemente. Bei Kommunikationsereignissen sind dies immer zwei, bei Registrierungsereignissen, lokalen und periodischen Ereignissen jeweils eines.

Kommunikationsereignisse werden verwendet um folgende Vorgänge zu beschreiben:
- "*send*": kann ein abgehender Methodenaufruf (*send call*), ein abgehender Datentransfer (send message), oder ein abgehender Rückgabewert (*send return*) sein
- "*receive*": kann ein eingehender Methodenaufruf (*receive call*), ein eingehender Datentransfer (receive message), oder ein eingehender Rückgabewert (*receive return*) sein

Registrierungsereignisse sind z. B.:
- "*new*": dokumentiert das Erzeugen/Anlegen einer neuen Komponente oder eines Objekts durch ein anderes Systemelement. Beim Erzeugen erfolgt in der Regel auch eine Kommunikation (Datenaustausch) der betroffenen Komponenten untereinander, ähnlich dem Kommunikationsereignis "*send*".
- "*delete*": dokumentiert das Löschen einer Komponente oder eines Objekts durch ein anderes Systemelement.
- "*create*": ist eine Spezialform des Ereignisses new. Es dokumentiert das Erzeugen/Anlegen einer neuen Komponente oder eines Objekts ohne aber den Zusammenhang zum erzeugenden Element herzustellen.
- "*destroy*": dokumentiert das Löschen einer Komponente oder eines Objekts durch sich selbst

Lokale Ereignisse (*pass*) sind Ereignisse, die bei Erreichen einer bestimmten Codestelle generiert werden. Sie können das Abarbeiten von bestimmten Codeabschnitten dokumentieren oder auch interne Daten, z.B. den Inhalt lokaler Variablen, beinhalten.

Periodische Ereignisse (*periodic update*) sind nützlich um in zyklischen Abständen Systemvariablen oder andere vom Benutzer definierten Größen überwachen zu können.

Das erfindungsgemäße Verfahren und die erfindungsgemäße Vorrichtung sind grundsätzlich in allen MW-basierten verteilten Systemen, wie z. B. COM, CORBA, EJB, die die oben genannten Anforderungen an das zu beobachtende System SUB erfüllen, einsetzbar.

Eine Realisierung für verschiedene Windows™-Systeme, einschließlich Windows CE™ und COM™ existiert. Das Verfahren zur Instrumentierung beruht bspw. auf unter Windows™ / COM™ gängigen Methoden wie:
1. Delegation von Methodenaufrufen,
2. Laden von dynamisch zuladbaren Libraries (DLLs) in fremde oder bereits laufende Prozesse und
3. Umleitung von Win32 API-Funktionen.

## Patentansprüche

1. Verfahren zur automatischen Erfassung und Aufzeichnung von Systeminformationen und Abläufen in verteilten, nebenläufigen komponentenbasierten Softwaresystemen,
- bei dem unter Berücksichtigung von Konfigurationsdaten (CD1,..,CD3) und Typinformationen (TI) mindestens ein Inspektionsinstrument (I1,I2,I3) in mindestens eine Komponente (SC1, SC2, MID) eines zu beobachtenden Systems (SUB) eingefügt wird,
- bei dem in den Komponenten mit Inspektionsinstrumenten zur Laufzeit Nachrichten (N1, N2, IN) des zu beobachtenden Systems erzeugt werden,
- bei dem die Nachrichten gesammelt und abhängig von den Konfigurationsdaten gefiltert werden und
- bei dem die gesammelten Nachrichten derart in Daten (OUT) für ein universelles Auswertungsmodell transformiert werden, dass logische Zusammenhänge und Kommunikationszusammenhänge zwischen einzelnen Systemkomponenten hergestellt, Systemereignisse innerhalb des zu beobachtenden Systems in die richtige zeitliche Abfolge gebracht und statische Typinformationen den Systeminformationen hinzugefügt werden.

2. Verfahren nach Anspruch 1,
bei dem beim Start des Systems das Inspektionsinstrument in Form eines Create-Instruments (I3) nur in einer Middleware (MID) erzeugt wird, wobei die Middleware eine Software zwischen einer Applikation und einer darunter liegenden Netzwerkschicht darstellt, und in mindestens eine Systemkomponente mindestens ein Inspektionsinstrument in Form eines Call-Instruments (I1, I2) eingefügt wird.

3. Verfahren nach Anspruch 1 oder 2,
bei dem die Inspektionsinstrumente Nachrichten (N1,N2) an eine Inspektionskomponente (IC) liefern, die einen Instrumentierungscode beinhaltet, der von mehreren Prozessen angesprochen wird, und die die Nachrichten (IN) des zu beobachtenden Systems (SUB) liefert.

4. Vorrichtung zur automatischen Erfassung und Aufzeichnung von Systeminformationen und Abläufen in verteilten, nebenläufigen komponentenbasierten Softwaresystemen,
- bei der ein Konfigurationsmodul (CONF) derart vorhanden ist, dass in Abhängigkeit einer Typinformation (TI) Systemkomponenten des zu beobachtenden Systems ausgewählt werden und in diese Inspektionsinstrumente (I1, I2) eingefügt werden, welche zur Laufzeit Nachrichten (N1,N2,IN) des zu beobachtenden Systems erzeugen,
- bei der ein Beobachtungsmodul (OBS) derart vorhanden ist, dass die, im Abhängigkeit von Konfigurationsdaten im Konfigurationsmodul ausgewählten Nachrichten (IN) der Inspektionsinstrumente sammelbar sind,
- bei der ein Transformationsmodul (TRANS) derart vorhanden ist, dass durch Herstellung von logischen Zusammenhängen und Kommunikationszusammenhängen der Nachrichten , durch Ordnen nach der zeitlich korrekten Abfolge von Systemereignissen und durch Hinzufügen von statischen Typinformationen aus Nachrichten der Inspektionsinstrumente Daten (OUT) für mindestens ein universelles Auswertungsmodul bildbar sind.

5. Vorrichtung nach Anspruch 4,
bei der ein Instrumentierungsmodul (INST) derart vorhanden ist, dass das mindestens eine Inspektionsinstrument in Form eines Create-Instruments (I3) nur in einer Middleware erzeugt wird, wobei die Middleware eine Software zwischen einer Applikation und einer Netzwerkschicht darstellt, und in mindestens eine Systemkomponente mindestens ein Inspektionsinstrument in Form eines Call-Instruments (I1,I2) eingefügt wird.

## Claims

1. Method for the automatic capture and recording of system data and activities in distributed and parallel-running component-based software systems,
- with which, taking into account items of configuration data (CD1,..,CD3) and type information (TI), at least one inspection instrument (I1,I2,I3) is inserted into at least one component (SC1, SC2, MID) of a system (SUB) which is to be observed,
- with which messages (N1, N2, IN) about the system to be observed are generated in the components with inspection instruments at the time of execution,
- with which the messages are collected, and filtered in a way dependent on the configuration data, and
- with which the collected messages are transformed into data (OUT) for a universal evaluation model in such a way as to reproduce the logical and communication interrelationships between the individual system components, to order system events within the system under observation into their correct time sequence, and to append static type information to the system data.

2. Method in accordance with claim 1,
with which, when the system is started up, the inspection instrument, in the form of a create instrument (I3), is created only in an item of middleware (MID), where the middleware represents an item of software between an application and an underlying network layer, and at least one inspection instrument in the form of a call instrument (I1, I2) is inserted into at least one system component.

3. Method in accordance with claim 1 or 2,
with which the inspection instruments supply to an inspection component (IC) messages (N1,N2) which contain instrumentation code, which is addressed by several processes, and which supplies the messages (IN) for the system under observation (SUB).

4. Device for the automatic capture and recording of system data and activities in distributed and parallel-running component-based software systems,
- having a configuration module (CONF) such that system components of the system under observation are selected, depending on an item of type information (TI), and inspection instruments (I1, 12) are inserted into these components, which generate the messages (N1, N2, N3) about the system under observation at the time of execution,
- having an observation module (OBS) such that messages (IN) from the inspection instrument dependent on the configuration data, and selected in the configuration module, can be collected,
- having a transformation module (TRANS) such that it is possible to compile, from the messages from the inspection instruments, the data (OUT) for at least one universal evaluation module, by the reproduction of logical and communication interrelationships for the messages, by ordering system events into their correct time sequence, and by appending static type information.

5. Device in accordance with claim 4,
having an instrumentation module (INST) such that at least one inspection instrument, in the form of a create instrument (I3), is created only in an item of middleware, where the middleware represents an item of software between an application and a network layer, and at least one inspection instrument in the form of a call instrument (I1, I2) is inserted into at least one system component.

## Revendications

1. Procédé de saisie et d'enregistrement automatiques d'informations de système et de déroulements dans des systèmes logiciels distribués, parallèles et basés composants, dans lequel
- compte tenu de données de configuration (CD1, ..., CD3) et d'informations types (TI), au moins un instrument d'inspection (I1, I2, I3) est inséré dans au moins un composant (SC1, SC2, MID) d'un système à observer (SUB),
- des messages (N1, N2, IN) du système à observer sont produits dans des composants avec des instruments d'inspection pendant la durée d'exécution,
- les messages sont collectés et filtrés en fonction des données de configuration et
- les messages collectés sont transformés en données (OUT) pour un modèle d'évaluation universel de manière telle que des rapports logiques et des rapports de communication sont établis entre des composants individuels du système, des événements du système à l'intérieur du système à observer sont mis dans le bon ordre temporel et des informations types statiques sont ajoutées aux informations du système.

2. Procédé selon la revendication 1,
dans lequel, lors du démarrage du système, l'instrument d'inspection est produit sous la forme d'un instrument «create» (I3) uniquement dans un middleware (MID), le middleware représentant un logiciel entre une application et une couche de réseau qui se trouve en dessous, et au moins un instrument d'inspection est inséré dans au moins un composant du système sous la forme d'un instrument «call» (I1, I2).

3. Procédé selon la revendication 1 ou 2,
dans lequel les instruments d'inspection fournissent des messages (N1, N2) à un composant d'inspection (IC) qui contient un code d'instrumentation qui est sollicité par plusieurs processus et qui fournit les messages (IN) du système à observer (SUB).

4. Dispositif de saisie et d'enregistrement automatiques d'informations de système et de déroulements dans des systèmes logiciels distribués, parallèles et basés composants, dans lequel
- un module de configuration (CONF) existe de manière telle qu'en dépendance d'une information type (TI) des composants de système du système à observer sont sélectionnés et des instruments d'inspection (I1, I2) sont insérés dans ceux-ci, lesquels produisent, pendant la durée d'exécution, des messages (N1, N2, IN) du système à observer,
- un module d'observation (OBS) existe de manière telle que les messages (IN) des instruments d'inspection, sélectionnés dans le module de configuration en fonction de données de configuration, peuvent être collectés,
- un module de transformation (TRANS) existe de manière telle que des données (OUT) peuvent être constituées pour au moins un module d'évaluation universel par établissement de rapports logiques et de rapports de communication des messages, par arrangement d'événements du système selon l'ordre temporel correct et par ajout d'informations types statiques à partir de messages des instruments d'inspection.

5. Dispositif selon la revendication 4,
dans lequel un module d'instrumentation (INST) existe de manière telle que l'au moins un instrument d'inspection est produit sous la forme d'un instrument «create» (I3) dans un middleware uniquement, le middleware représentant un logiciel entre une application et une couche de réseau, et au moins un instrument d'inspection étant inséré sous la forme d'un instrument «call» (I1, I2) dans au moins un composant du système.
